# EUROPEAN PATENT SPECIFICATION

(11) **EP 0 870 128 B1**
(45) Date of publication and mention of the grant of the patent: **05.12.2001**
(21) Application number: 96931337.8
(22) Date of filing: 13.09.1996
(51) Int. Cl.: F16H 7/00

(54) **TENSIONING DEVICE FOR DRIVE BELTS**
SPANNVORRICHTUNG FÜR RIEMENTRIEBE
DISPOSITIF TENDEUR POUR COURROIE D'ENTRAINEMENT

(30) Priority: 14.09.1995 SE 9503177
(43) Date of publication of application: 14.10.1998
(73) Proprietor: Brangenfeldt, Torbjörn, 436 44 Askim (SE)
(72) Inventor: Brangenfeldt, Torbjörn, 436 44 Askim (SE)
(74) Representative: Mossmark, Anders
(86) International application number: SE9601141
(87) International publication number: WO9710453

(56) References cited:
- WO-A-94/02756
- DD-A- 275 166
- FR-A- 1 111 228
- US-A- 1 567 494
- PATENT ABSTRACTS OF JAPAN, Vol. 10, No. 130, M-478; & JP,A,60 256 659, (CANON K.K.), 18 December 1985.

## Description

### TECHNICAL FIELD:

The invention relates to a belt drive with a drive belt, according to the preamble of claim 1.

### TECHNICAL BACKGROUND:

Drive belts, which convey forces from one pulley to another solely by means of frictional forces, require a certain tension which provides the necessary contact against the pulleys. It is previously known to start and maintain this tension either by means of adapting the distance between the pulleys or by means of a tensioning pulley, which presses against a length of the belt and deflects it in a larger or smaller arc in order to tension the belt. An adaption of the distance between the shafts requires that at least one shaft is movable, which in turn generally implies that the entire unit, of which the shaft is a part, has to be movable. Many times, such an arrangement is not possible because of the fact that such a displacement cannot be done or is not convenient. If an automatic post-tensioning of the belt is desired after mounting, something which in many cases is desirable, it is often most disadvantageous if an entire unit should have to be displaced by means of, for instance, springs or the force of gravity.

When the principle of correcting the distance between the shafts is concerned, the only remaining possibility, in many cases, is to apply a manual post-tensioning. For the remaining cases, the principle of a tensioning pulley must be applied. This, however, implies that an additional bearing has to be arranged and when automatic post-tensioning by means of a spring-loaded tensioning pulley is concerned, there is a risk that this and its suspension start to oscillate.

For this reason, there is a need of another type of tensioning device, which is not associated with the above-mentioned disadvantages. For chain drives it has been suggested to insert a shaft-less, resilient ring between the chain lengths. The ring may adopt a compressed shape between the chain lengths, when in a compressed position, in order to subsequently expand to a more circular shape whenever a post-tensioning is required. This solution, which is evident from DD, A3, 275 166, may not, however, be applied for belt drives. When chain drives are concerned, the tensioning pulley is toothed and engages with the chain and will therefore maintain its position in the system. When belt drives are concerned, on the other hand, slippage is to be expected, resulting in that the ring may "float" within the system.

JP-A-60-256 659 discloses as defined in the preamble of claim 1 a tensioning device for drive belts. The prior known device is formed as a ring which is positioned between the pulleys so that it is required a space exceeding the diameter of the ring.

### SUMMARY OF THE INVENTION:

The object of the present invention is to provide a belt drive without the above discussed disadvantages.

Said object is achieved by means of the belt drive according to the present invention, whose characteristics are apparent from the characterising part of claim 1.

In the present invention, a principle associated with the principle of a tensioning ring is utilized whereby, however, it is adapted to belt drives and preferably cone belt drives by means of the unique features of the invention.

These imply that the tensioning ring is inserted between the lengths of the drive belt and arranged so that it maintains its position in the driving system.

The tensioning ring is fixed by means of travelling together with the belt around a pulley which the drive belt engages with, and in such a way that this engagement does not deteriorate, but the power transmission properties remain.

By means of this arrangement, a tensioning device is provided which does not possess the previously mentioned disadvantages but which may be applied for fixed distances between shafts and which provides an automatic post-tensioning of the belt in case it increases in length due to strain or wear. Furthermore, the tensioning device according to the invention provides good damping of fluctuations in the speed of rotation.

### DESCRIPTION OF THE DRAWINGS:

Different embodiments of the invention are described in the following, whereby reference is made to the attached drawings, in which
- Fig. 1: shows a side view of a belt drive, schematically illustrating the principle of two embodiments,
- Fig. 2: shows a section, as seen along a diameter of pulley for cone belt driving, illustrating the first embodiment, and
- Fig. 3: shows a corresponding section of the second embodiment.

### PREFERRED EMBODIMENTS:

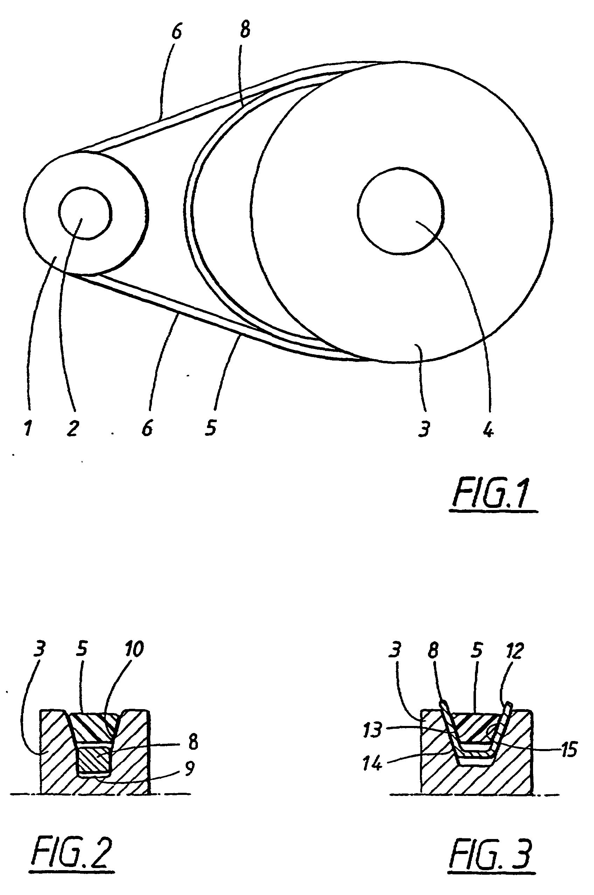

In Fig. 1 a belt drive is shown in side view. It is designed with a first pulley 1 which is able to rotate about a shaft 2, and with a second pulley 3 which may rotate about a shaft 4. The pulleys are connected by an endless drive belt 5. The drive belt is presumed to be a cone belt, i.e. a wedge-shaped belt, which is situated in a groove in the pulley. This is evident from Fig. 2, wherein the pulley (1 or 3) and the belt 5 have the same designations as in Fig. 1.

Free lengths 6 of the belt are exposed between the engagement of the belt 5 at the respective pulleys. In order to maintain power transmission by means of the frictional engagement of the belt with the pulleys, these lengths must be kept under a certain tension, thus an adapted belt tension must be maintained. Due to elongation and wear of the belt, this tension will decrease over a certain operating interval and a post-tensioning must be performed, also if, when mounting the belt, an adapted tension has been reached by means of a belt length which is correctly adapted to the prevailing geometric conditions. Even this, however, is difficult to achieve in certain installations. In order to obtain such a correct, initial belt tension, it is necessary in practice that one of the shafts is displaceable which, as previously mentioned, is not always possible.

In order to reach a correct belt tension during the lifetime of the belt and also in order to, when initially mounting the belt the first time, arrive at the correct belt tension, an automatically acting belt tensioning device is required. If not, perpetual manual adjustments would otherwise have to be performed. Such a device according to the invention is constituted of a resiliently bendable ring 8, situated between the lengths 6.

The ring 8 travels around the pulley 3. It is dimensioned in such a way that it is compressed by the belt lengths 6 to an approximately elliptical shape. Thereby, the belt lengths 6 are influenced by a spring force from the ring 8 of the tensioning device and the belt lengths are maintained under tension.

In order to be able to utilise the herein described principle of the belt tensioning device, it is required that it does not negatively affect the frictional transmission from belt to pulley to any considerable extent. This is achieved, according to the first embodiment illustrated in Fig. 2, by means of the tensioning ring 8 being inserted into a groove 9, which constitutes a continuation inwards towards the centre of the bottom part of the wedge-shaped groove 10, into which the cone belt 5 is inserted. Consequently, the belt, in comparision to a common cone belt installation, has a completely unchanged grip and the ring 8 only affects the lengths 6 of the belt so that these are kept tensioned.

The second embodiment is shown in Fig. 3. Also here, the pulley 3 and the cone belt 5 are to be found. Herein, however, the edge-shaped grooves 12 of the pulley are wider than what a normal contact of the belt 5 would require. The groove is namely adapted to the outside of the tensioning ring, also herein denoted with 8. The tensioning ring has a v-shape with a wall 13, the outside of which, denoted with 14, is adapted to make contact against the outsides of the belt 5. Consequently, this implies that the inside of the tensioning ring 8 forms a groove corresponding to the groove 10, according to Fig. 2 (when the same belt profile is concerned), when the tensioning ring is inserted into its groove 12.

In the second embodiment, it is certainly the case that the contact of the cone belt against the pulley is different, since the contact is made via the tensioning ring 8, which constitutes a spacer. However, this does not have to imply any disadvantage so long as the material of the tensioning ring is correctly adapted so that it exhibits high friction against both the cone belt and the groove of the pulley. It may even be possible to improve the friction if a material with a higher coefficient of friction is chosen.

In both embodiments, operation implies that the tensioning ring 8 will be subjected to a perpetual shape modification, resulting in a bending of the same. The material of the ring has to be adapted to this. However, a number of elastomers, plastic and rubber materials may be selected, which can withstand a long operation time without snapping or obtaining any abnormal heating. One material which successfully has been tested in this connection is polypropylene.

Herein, the invention has been shown as being applied to cone belts. The first embodiment, however, may also be applied to other belt types, for instance so called V-belts with a number of parallel V-shaped portions whereby, while maintaining the principle according to Fig. 2, one or several tensioning rings are inserted into countersunk grooves in the pulley which is provided with several V-grooves. Also the second embodiment may be applied in this case, accordingly the tensioning is designed as a spacing, arranged with repeated V-shapes, between the V-belt and the grooves of the pulley.

Especially the embodiment according to Fig. 2 could, moreover, be utilized for tooth belts, whereby a groove is notched under the tooth bottoms of the pulley in which groove the tensioning ring is inserted and rests against the tooth tops of the belt. When the embodiment according to Fig. 3 is concerned, it may be complemented with teeth on the inside 15 of the tensioning ring 8 and/or outside 14 for meshing with the corresponding teeth shapes on the sides of the cone belt 5 and in the grooves of the pulley 12, respectively. If the tensioning ring 8 has teeth on both the inside and the outside for tooth engagement, with both the drive belt 5 and the groove of the pulley 12, and the drive belt also has tooth engagement with the second pulley 1, a positive power transmission of tooth belt type with no slippage is obtained.

## Claims

1. Belt drive with a drive belt cooperating with pulleys (1,3) and including a tensioning device in the form of a resiliently bendable ring (8) for tensioning said drive belt, whereby
• said resiliently bendable ring (8) is arranged to be inserted between lengths of said drive belt (5), and
• said resiliently bendable ring (8) is designed and dimensioned in order to be compressed between the belt lengths (6), thereby exerting a spring force against said drive belt so as to tension the drive belt,
**characterized in that**
• said resiliently bendable ring (8) is inserted in a groove (9/12) in at least one of said pulleys (1 or 3) of said belt drive, and
• said resiliently bendable ring is designed with a circumference large enough to encircle said one pulley, while in contact with a portion of its periphery in said groove and stretching out from said pulley between the belt lengths (6) which extend outwards from the pulley.

2. Belt drive according to daim 1, wherein said groove (9) is notched in the pulley (3), inside of the surface (10) against which the belt (5) is arranged to rest, and with such a depth that the tensioning ring (8) can be accommodated inside, towards the centre of the pulley, in relation to the portion of the drive belt situated furthest in.

3. Belt drive according to claim 2, wherein the drive belt (5) is a cone belt and the pulley (3) is arranged with a corresponding, in cross-section, edge-shaped groove (10), from the bottom of which said groove (9) for the resiliently bendable ring (8) extends inwards towards the centre of the pulley. (Fig. 2)

4. Belt drive according to daim 1, wherein the resiliently bendable ring (8) has a V-shape and is arranged, by means of an inner surface (15) to form a position for the drive belt (15), which is a cone belt, and an outer surface (14) which is adapted to be in engagement with a V-shaped groove (12) in the pulley (3) (Fig. 3).

5. Belt drive according to daim 4, wherein the resiliently bendable ring (8) is provided with teeth on said inner surface (15) and/or said outer surface (14), which teeth are arranged for intermeshing with the corresponding tooth shapes on the drive belt (5) and/or in the groove of the pulley (3) respectively.

## Patentansprüche

1. Riementrieb mit einem Antriebsriemen, der mit Riemenscheiben (1, 3) zusammenwirkt und der eine Spanneinrichtung in Form eines federnd biegbaren Ringes (8) zum Spannen des Antriebsriemens aufweist, wobei
- der federnd biegbare Ring (8) für den Einsatz zwischen den Längen des Antriebriemens (5) vorgesehen ist, und wobei
- der federnd biegbare Ring (8) für das Zusammendrücken zwischen den Riemenlängen (6) ausgebildet und dimensioniert ist, um dadurch eine Federkraft gegen den Antriebsriemen zum Spannen des Antriebsriemens ausüben,
**dadurch gekennzeichnet, dass**
- der federnd biegbare Ring (8) in eine Nut (9/12) in wenigstens einer der Riemenscheiben (1 oder 3) des Riementriebs eingesetzt ist, und dass
- der federnd biegbare Ring mit einem Umfang gestaltet ist, der groß genug ist, um die eine Riemenscheibe zu umgeben, während er sich mit einem Abschnitt seines Umfangs in Berührung mit der Nut befindet und sich von der Riemenscheibe zwischen den sich nach außen von der Riemenscheibe erstreckenden Riemenlängen (6) ausdehnt.

2. Riementrieb nach Anspruch 1, bei dem die Nut (9) in der Riemenscheibe (3) im Inneren der Fläche (10) gegen die ein Ruhen des Riemens (5) vorgesehen ist, gekerbt und mit einer solchen Tiefe versehen ist, dass der spannende Ring (8) in Richtung auf die Mitte der Riemenscheibe, bezogen auf den am weitesten innenliegenden Abschnitt des Antriebsriemens, unterbringbar ist.

3. Riementrieb nach Anspruch 2, wobei der Antriebsriemen (5) ein Keilriemen ist und wobei die Riemenscheibe (3) mit einer im Querschnitt flankenförmigen Nut (10) ausgebildet ist, von deren Boden die Nut (9) für den federnden biegbaren Ring (8) sich in Richtung auf die Mitte der Riemenscheibe (Fig. 2) nach innen erstreckt.

4. Riementrieb nach Anspruch 1, bei dem der federnd biegbare Ring (8) eine V-Form besitzt und zur Bildung einer Stellung für den Antriebsriemen (15), der ein Keilriemen ist, mit einer Innenfläche (15) und einer Außenfläche (14) versehen ist, welche für einen Eingriff mit einer V-förmigen Nut (12) in der Riemenscheibe (3) (Fig.3) vorgesehen ist.

5. Riementrieb nach Anspruch 4, wobei der federnd biegbare Ring (8) mit Zähnen an der Innenfläche (15) und/oder an der Außenfläche (14) versehen ist, wobei die Zähne zum Kämmen mit entsprechenden korrespondierenden Zahnprofilen auf dem Antriebsriemen (5) und/oder in der Nut der Riemenscheibe (3) vorgesehen sind.

## Revendications

1. Transmission à courroie d'entraînement qui coopère avec des poulies (1, 3) et qui comporte un tendeur sous forme d'un anneau (8) qui peut fléchir élastiquement et qui est destiné à tendre la courroie de transmission, dans laquelle
l'anneau (8) qui peut fléchir élastiquement est disposé afin qu'il soit inséré entre des brins de la courroie d'entraînement (5), et
l'anneau (8) qui peut fléchir élastiquement a une réalisation et des dimensions telles qu'il peut être comprimé entre les brins (6) de courroie en exerçant ainsi une force élastique contre la courroie de transmission afin que celle-ci soit tendue,
**caractérisée en ce que**
l'anneau (8) qui peut fléchir élastiquement est inséré dans une gorge (9/12) de l'une au moins des poulies (1 ou 3) de la transmission à courroie, et
l'anneau qui peut fléchir élastiquement est réalisé avec une circonférence suffisamment grande pour qu'il puisse entourer ladite poulie, tout en étant au contact d'une partie de la périphérie de la gorge et en étant tiré hors de la poulie entre les brins (6) de courroie qui s'étendent vers l'extérieur de la poulie.

2. Transmission à courroie selon la revendication 1, dans laquelle la gorge (9) forme une encoche dans la poulie (3), vers l'intérieur de la surface (10) contre laquelle la courroie (5) est en appui, et avec une profondeur telle que l'anneau tendeur (8) peut être logé à l'intérieur, vers le centre de la poulie, par rapport à la partie de courroie d'entraînement placée plus à l'intérieur.

3. Transmission à courroie selon la revendication 2, dans laquelle la courroie d'entraînement (5) est une courroie trapézoïdale, et la poulie (3) a, en coupe, une gorge correspondante(10) en forme de bord, depuis le fond de laquelle la gorge (9) destinée à l'anneau (8) qui peut fléchir élastiquement s'étend vers l'intérieur vers le centre de la poulie (figure 2).

4. Transmission à courroie selon la revendication 1, dans laquelle l'anneau (8) qui peut fléchir élastiquement a une forme en V et est réalisé avec une surface interne (15) destinée à délimiter la position de la courroie de transmission (15), qui est une courroie trapézoïdale, et avec une surface externe (14) destinée à coopérer avec une gorge en V (12) formée dans la poulie (3) (figure 3).

5. Transmission à courroie selon la revendication 4, dans laquelle l'anneau (8) qui peut fléchir élastiquement a des dents placées à sa surface interne (15) et/ou à sa surface externe (14), ces dents étant disposées afin qu'elles soient en prise avec des formes dentées correspondantes de la courroie de transmission (5) et/ou de la gorge de la poulie (3) respectivement.
